# EUROPÄISCHE PATENTANMELDUNG

(11) **EP 4 456 349 A1**
(43) Veröffentlichungstag der Anmeldung: **30.10.2024**
(21) Anmeldenummer: 24171571.3
(22) Anmeldetag: 22.04.2024
(51) Int. Cl.: H02G 3/08, H02G 3/14

(54) **MEHRTEILIGE ABDECKUNG UND VERFAHREN ZUR HERSTELLUNG EINER MEHRTEILIGEN ABDECKUNG**

(30) Priorität: 28.04.2023 DE 102023111144
(71) Anmelder: ABB SCHWEIZ AG, 5400 Baden (CH)
(72) Erfinder: Diehl, Sven, 57078 Siegen (DE); Schmidt, Wolfram, 58730 Fröndenberg (DE); Rees, Martin, 78054 Villingen-Schwenningen (DE)
(74) Vertreter: Zimmermann & Partner Patentanwälte mbB

(57) **Zusammenfassung**

Es wird eine Mehrteilige Abdeckung (100) eines elektrischen Installationsgerätes, aufweisend eine erste Teilabdeckung (10) aus einem ersten Material; eine zweite Teilabdeckung (60) aus einem zweiten Material, wobei das zweite Material in mindestens einer Materialeigenschaft verschieden zum ersten Material ist; wobei die erste Teilabdeckung (10) und die zweite Teilabdeckung (60) mittels mindestens zwei gegenüberliegend angeordneten Rastelement-Nut Verbindungen miteinander verbunden sind offenbart. Weiterhin wird ein Verfahren zur Herstellung einer mehrteiligen Abdeckung (100) eines elektrischen Installationsgerätes offenbart. Dieses weist die Schritte auf: Herstellen einer ersten Teilabdeckung (10) aus einem ersten Material, wobei die erste Teilabdeckung mindestens zwei gegenüberliegend angeordnete Nuten aufweist; Herstellen einer zweiten Teilabdeckung (60) aus einem zweiten Material, wobei das zweite Material in mindestens einer Materialeigenschaft verschieden zum ersten Material ist, und wobei die zweite Teilabdeckung (60) mindestens zwei gegenüberliegend angeordnete Rastelemente aufweist; und Herstellen von mindestens zwei Rastelement-Nut Verbindungen zwischen den mindestens zwei Nuten der ersten Teilabdeckung (10) und den mindestens zwei Rastelementen der zweiten Teilabdeckung (60).

## Beschreibung

### TECHNISCHES GEBIET

Die vorliegende Offenbarung betrifft eine mehrteilige Abdeckung eines elektrischen Installationsgerätes und ein Verfahren zur Herstellung einer mehrteiligen Abdeckung eines elektrischen Installationsgerätes.

### TECHNISCHER HINTERGRUND

Aus der Hausinstallationstechnik sind Abdeckungen als dekorative und/oder funktionale Elemente bekannt. Abdeckungen werden beispielsweise auch als Designabdeckung, Zentralscheibe oder C-Scheibe bezeichnet.

Bekannt sind einteilige Abdeckungen und mehrteilige Abdeckungen. Einteilige Abdeckungen sind meist eher dekorativer Natur und werden beispielsweise für Datenkommunikationsanschlüsse verwendet. Mehrteilige Abdeckungen erfüllen regelmäßig, aber nicht notwendigerweise, weitere Funktionen und sind daher oft dekorative und funktionale Elemente in der Hausinstallationstechnik. Mehrteilige Abdeckungen werden beispielsweise für Raumtemperaturregler, Jalousiesteuergeräte, Dimmer oder ähnliche verwendet.

Üblicherweise erfolgt die Montage der Abdeckung als Bauteil eines Installationsgerätes als letzter Schritt, meistens mittels einer oder mehrerer Schrauben und/oder Rastelementen. Insbesondere da mehrteilige Abdeckungen somit typischerweise als sichtbare Bauteile in der Hausinstallationstechnik vorgesehen sind, werden hohe Anforderungen an die Optik und Maßhaltigkeit solcher mehrteiligen Abdeckungen gestellt. Üblicherweise erfordert die Fertigung einer mehrteiligen Abdeckung daher einen kosten- und zeitintensiven Zwei-Komponenten Spritzgießprozess.

Die zugrundeliegende Aufgabe besteht daher darin, eine mehrteilige Abdeckung bereitzustellen, die den hohen Anforderungen an Maßhaltigkeit und Optik gerecht wird, jedoch auf den kosten- und zeitintensiven Zwei-Komponenten Spritzgießprozess verzichten kann.

### KURZE DARSTELLUNG DER ERFINDUNG

Diese Aufgabe wird durch eine mehrteilige Abdeckung gemäß Anspruch 1 sowie durch das Verfahren zur Herstellung einer mehrteiligen Abdeckung eines elektrischen Installationsgeräts gemäß Anspruch 6 gelöst. Weitere Ausführungsformen, Ausgestaltungen und Vorteile ergeben sich aus den abhängigen Ansprüchen und der nachfolgenden Beschreibung.

Gemäß einem Aspekt der vorliegenden Offenbarung wird eine mehrteilige Abdeckung eines elektrischen Installationsgerätes bereitgestellt, die eine erste Teilabdeckung aus einem ersten Material und eine zweite Teilabdeckung aus einem zweiten Material aufweist, wobei das zweite Material in mindestens einer Materialeigenschaft verschieden zum ersten Material ist. Die erste Teilabdeckung und die zweite Teilabdeckung sind mittels mindestens zwei gegenüberliegend angeordneten Rastelement-Nut Verbindungen miteinander verbunden. Die erste Teilabdeckung und die zweite Teilabdeckung der mehrteiligen Abdeckung können auf diese Weise in getrennten Fertigungsprozessen gefertigt werden, so dass auf das Zwei-Komponenten Spritzgießverfahren verzichtet werden kann.

Gemäß einem weiteren Aspekt der vorliegenden Offenbarung wird ein Verfahren zur Herstellung einer mehrteiligen Abdeckung eines elektrischen Installationsgerätes bereitgestellt. Das Verfahren weist die folgenden Schritte auf: Herstellen einer ersten Teilabdeckung aus einem ersten Material, wobei die erste Teilabdeckung mindestens zwei gegenüberliegend angeordnete Nuten aufweist, Herstellen einer zweiten Teilabdeckung aus einem zweiten Material, wobei das zweite Material in mindestens einer Materialeigenschaft verschieden zum ersten Material ist, und wobei die zweite Teilabdeckung mindestens zwei gegenüberliegend angeordnete Rastelemente aufweist; und Herstellen von mindestens zwei Rastelement-Nut Verbindungen zwischen den mindestens zwei Nuten der ersten Teilabdeckung und den mindestens zwei Rastelementen der zweiten Teilabdeckung.

Die Einzelheiten eines oder mehrerer Aspekte der Offenbarung sind in den beigefügten Figuren und der nachfolgenden Beschreibung dargelegt. Andere Merkmale, Objekte und Vorteile der in dieser Offenbarung beschriebenen Prinzipien werden aus der Beschreibung und den Zeichnungen sowie aus den Ansprüchen ersichtlich.

### KURZBESCHREIBUNG DER FIGUREN

Nachfolgend wird die Erfindung anhand von Ausführungsformen näher erläutert, ohne dass diese den durch die Schutzansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen ähnliche Teile.
Fig. 1 zeigt in perspektivischer Ansicht schematisch eine mehrteilige Abdeckung gemäß Ausführungsformen der vorliegenden Offenbarung in einem getrennten Zustand.
Fig. 2 zeigt in perspektivischer Ansicht schematisch die mehrteilige Abdeckung aus Fig. 1 im gefügten Zustand.
Fig. 3 zeigt in einer Seitenansicht schematisch einen Fügungsprozess einer mehrteiligen Abdeckung gemäß Ausführungsformen der vorliegenden Offenbarung.

### DETAILLIERTE BESCHREIBUNG

Die in dieser Offenbarung beschriebenen Prinzipien betreffen eine mehrteilige Abdeckung eines elektrischen Installationsgerätes, die kostengünstig gefertigt und hohen Anforderungen an Optik und Funktionalität gerecht werden kann. Insbesondere können Ausführungsformen der vorliegenden Offenbarung gleichmäßige und/oder geringe Spaltmaße aufweisen. Ferner können mehrteilige Abdeckungen gemäß der vorliegenden Offenbarung besonders geringe Dimensionen in einer Tiefenrichtung aufweisen.

Mittels mindestens zwei gegenüberliegend angeordneten Rastelement-Nut Verbindungen wird eine dauerhafte, in jede Richtung wirkende Verbindung zwischen einer ersten Teilabdeckung und einer zweiten Teilabdeckung hergestellt. In einigen Ausführungsformen ist mindestens eine Rastelement-Nut Verbindung dazu konfiguriert, unter einer elastischen Verformung der ersten Teilabdeckung und/oder der zweiten Teilabdeckung hergestellt zu werden.

Diese Offenbarung beschreibt einen Fügeprozess für die erste Teilabdeckung mit der zweiten Teilabdeckung einer mehrteiligen Abdeckung eines elektrischen Installationsgerätes. In diesem Kontext kann sich "elektrisches Installationsgerät" auf diverse Regler und Schalter der Hausinstallationstechnik beziehen. Weiterhin kann sich "elektrisches Installationsgerät" auf verschiedenste Daten-, Netzwerk-, Kommunikationsverteilereinrichtungen beziehen, die im Gebiet der Hausinstallationstechnik Verwendung finden und regelmäßig einer Abdeckung bedürfen.

Beispielsweise können mehrteilige Abdeckungen Drehreglerabdeckungen und/oder Schalterabdeckungen aufweisen. In diesem Beispiel sind dabei mehrteilige Abdeckungen derart angepasst, dass die entsprechenden, z.B. elektrischen, Drehregler und/oder Schalter mit Hilfe der Drehreglerabdeckungen und/oder Schalterabdeckungen von einer Person über die mehrteilige Abdeckung bedient werden können. Mehrteilige Abdeckungen können ferner beispielsweise teil- bzw. lichtdurchlässige Elemente, wie opake Fenster, aufweisen. Derart können Displays der Installationsgeräte sichtbar gemacht werden. Außerdem können mehrteilige Abdeckungen Funktionselemente aufweisen, die der Ermöglichung der Bedienung von kapazitiven Sensoren dienen. Beispielsweise können mehrteilige Abdeckungen die Bedienung von Touchscreens durch ein angepasstes Funktionselement der mehrteiligen Abdeckung vorsehen. Ferner können einzelne Funktionseinheiten der mehrteiligen Abdeckung, beispielsweise die erste Teilabdeckung und/oder die zweite Teilabdeckung, unterschiedliche Farben, Bedruckungseigenschaften und/oder ähnliches aufweisen.

Die erste Teilabdeckung besteht aus einem ersten Material, die zweite Teilabdeckung besteht aus einem zweiten Material, wobei das zweite Material in mindestens einer Materialeigenschaft verschieden zum ersten Material ist. Im Sinne der vorliegenden Offenbarung bedeutet "Material" in der Regel, dass es sich um einen spezifisch angepassten und/oder weiterverarbeiteten Werkstoff handelt. Es ist im Sinne der Offenbarung auf eine unterschiedliche Materialeigenschaft abzustellen, um das erste Material von dem zweiten Material zu unterscheiden. Beispielsweise kann es sich um den gleichen Werkstoff handeln, vor der Fügung der ersten Teilabdeckung mit der zweiten Teilabdeckung kann jedoch beispielsweise eine unterschiedliche Lackierung aufgetragen werden. Denkbar ist auch, dass nur eine der ersten Teilabdeckung und der zweiten Teilabdeckung eine Nachbehandlung nach einem Urformen erfährt. Beispielsweise kann die erste Teilabdeckung eine von der zweiten Teilabdeckung verschiedene Opazität aufweisen. Auch eine unterschiedliche innere Struktur der ersten Teilabdeckung von der zweiten Teilabdeckung, z.B. zur Erreichung unterschiedlicher Festigkeiten und/oder Fügungseigenschaften betreffend die abschließende Fügung mit dem elektrischen Installationsgerät, kann eine unterschiedliche Materialeigenschaft begründen. Die erste Teilabdeckung und die zweite Teilabdeckung können zusätzlich oder alternativ aus einem unterschiedlichen Werkstoff gefertigt sein.

Die erste Teilabdeckung wird mit der zweiten Teilabdeckung mittels den mindestens zwei gegenüberliegend angeordneten Rastelement-Nut Verbindungen verbunden. Die hergestellte Verbindung kann eine auf Dauer angelegte Verbindung sein, die üblicherweise nicht mehr getrennt wird. Die Verbindung kann gemäß einiger Ausführungsformen in jede Richtung so wirken, dass die erste Teilabdeckung gegenüber der zweiten Teilabdeckung unter normaler Krafteinwirkung in keiner Richtung beweglich ist und *vice versa.*

In einigen Ausführungsformen können die erste Teilabdeckung und die zweite Teilabdeckung mittels mindestens zwei an gegenüberliegenden Seitenflächen angeordneten Rastelement-Nut Verbindungen miteinander verbunden sein. Im Sinne dieser Offenbarung bezeichnet der Begriff "Seitenfläche" eine Flächenausrichtung die im Wesentlichen senkrecht zu einer Frontfläche steht. Die "Frontfläche" wiederum im Sinne der Offenbarung bezeichnet die Fläche einer mehrteiligen Abdeckung, die beispielsweise die Funktionselemente enthält, also etwaige Regler, Schalter und/oder ähnliches. Eine "Fläche" im Sinne der vorliegenden Offenbarung bezeichnet im Allgemeinen nicht notwendigerweise ein ebenes Flächenelement. Vielmehr erleichtert der Begriff "Fläche" die Beschreibung der Offenbarung. Die Flächen der mehrteiligen Abdeckung sind nicht unbedingt eben. Sie können vielmehr auch Radien, Rundungen, Erhebungen, Designelemente und/oder ähnliches aufweisen.

Gemäß einiger Ausführungsformen kann mindestens eine Rastelement-Nut Verbindung dazu konfiguriert sein, unter einer elastischen Verformung der ersten Teilabdeckung und/oder der zweiten Teilabdeckung gefügt zu werden. Die mehrteilige Abdeckung kann aus der ersten Teilabdeckung und der zweiten Teilabdeckung gefügt werden. Insbesondere kann unter elastischem Verformen der ersten Teilabdeckung von einem entspannten Zustand in einen Einbauzustand, Anlegen und/oder Einlegen der zweiten Teilabdeckung an/in die erste Teilabdeckung, und Zurückversetzen der ersten Teilabdeckung in den entspannten Zustand die mehrteilige Abdeckung gefügt werden. Beispielsweise kann mindestens ein erstes Rastelement in eine erste Nut gesetzt werden um eine erste Rastelement-Nut Verbindung herzustellen. Unter elastischer Verformung der ersten Teilabdeckung und/oder der zweiten Teilabdeckung, beispielsweise unter Krafteinwirkung durch eine Maschine und/oder eine Person auf die erste Teilabdeckung und/oder die zweiten Teilabdeckung, kann die gegenüberliegend zur ersten Rastelement-Nut Verbindung angeordnete zweite Rastelement-Nut Verbindung hergestellt werden. Beispielsweise können die mindestens zwei Rastelement-Nut Verbindungen derart konfiguriert sein, dass eine Fügung nur unter elastischer Verformung der ersten Teilabdeckung und/oder der zweiten Teilabdeckung erfolgen kann. Derartige Ausführungsformen können noch geringere Spaltmaße ermöglichen und/oder direkte Kraftübertragungen von der ersten Teilabdeckung auf die zweite Teilabdeckung und *vice versa* ermöglichen. So können relative Bewegungen der ersten Teilabdeckung zur zweiten Teilabdeckung noch effektiver vermieden werden.

In Ausführungsformen kann die erste Teilabdeckung eine äußere Teilabdeckung sein und die zweite Teilabdeckung kann eine innere Teilabdeckung sein. Die erste Teilabdeckung kann die zweite Teilabdeckung an mindestens zwei, insbesondere an mindestens drei Flächen umschließen oder *vice versa.* Gemäß einiger Ausführungsformen kann die erste Teilabdeckung die zweite Teilabdeckung oder *vice versa* an genau drei Seiten umschließen. Beispielsweise können diese drei Seiten zwei Seitenflächen und eine Rückseitenfläche sein. Die Rückseitenfläche ist dabei eine Fläche, die im Wesentlichen parallel zur Frontfläche steht. Beispielsweise können derart zwei Längs- oder Breitenabschnitte der Frontfläche der mehrteiligen Abdeckung von der ersten Teilabdeckung definiert werden und ein Längs- oder Breitenabschnitt kann von der zweiten Teilabdeckung definiert werden. Solche Ausführungsformen können die Fügung der mehrteiligen Abdeckung erleichtern und/oder Anforderungen an Spaltmaße zwischen der ersten Teilabdeckung und der zweiten Teilabdeckung kostengünstiger erreichen lassen. Insbesondere können derart lediglich zwei Spaltlinien in der Frontfläche vorhanden sein.

In Ausführungsformen kann die erste Teilabdeckung und/oder die zweite Teilabdeckung mindestens eine Seitenfläche mit einem Winkel zwischen 80° und 100° zu der Frontfläche aufweisen. Derartige Ausführungsformen können geringere Spaltmaße aufweisen und/oder die Fügung der ersten Teilabdeckung mit der zweiten Teilabdeckung erleichtern.

Gemäß einiger Ausführungsformen kann mindestens ein Rastelement der mindestens zwei Rastelement-Nut Verbindungen schwalbenschwanzprofilförmig ausgestaltet sein. Es hat sich gezeigt, dass sich schwalbenschwanzprofilförmig ausgestaltete Rastelement-Nut Verbindungen besonders gut dazu eignen, eine zuverlässige Verbindung herzustellen, die die erste Teilabdeckung und die zweite Teilabdeckung in jede Richtung gegeneinander fixieren. Ferner können eine besonders günstige Fertigung und Fügung ermöglicht werden. Insbesondere kann eine besonders geringe Dimension der mehrteiligen Abdeckung in einer Tiefenrichtung erreicht werden.

In Ausführungsformen können die mindestens zwei Rastelemente unterschiedliche Längen aufweisen. Beispielsweise können die mindestens zwei Rastelemente je nach Anordnung an einer jeweiligen Seitenfläche unterschiedliche Längen aufweisen. Auch an einer Seitenfläche mit mindestens zwei Rastelementen können die mindestens zwei Rastelemente unterschiedliche Längen aufweisen. Gemäß einiger Ausführungsformen weisen die Rastelemente zumindest teilweise eine geringe Breite im Vergleich zu der Fläche auf, an der sie angeordnet sind. Beispielsweise kann es vorteilhaft sein, mehrere kürzere Rastelemente entlang der Breite der Fläche vorzusehen. Derartige Ausführungsformen können die Fügung erleichtern. Die Breite erstreckt sich dabei in eine Richtung der Fläche, die im Wesentlichen parallel zur Frontfläche ist.

In Ausführungsformen können die mindestens zwei Rastelement-Nut Verbindungen asymmetrisch angeordnet sein derart, dass eine erste Einbauposition eineindeutig vorgegeben ist. Beispielsweise kann die asymmetrische Anordnung mittels einer unterschiedlichen Anzahl an Rastelement-Nut Verbindungen je Seitenfläche hergestellt werden. In einigen Ausführungsformen kann die asymmetrische Anordnung alternativ oder zusätzlich mittels spezifischer Lageanordnungen entlang einer Höhenrichtung und/oder der Breitenrichtung der Fläche, an der die Rastelemente angeordnet sind, hergestellt werden. Die Höhenrichtung der Fläche ist im Wesentlichen senkrecht zur Frontfläche. Derartige Ausführungsformen können eine Fügung erleichtern. Gemäß einiger alternativer Ausführungsformen können die mindestens zwei Rastelement-Nut Verbindungen derart angeordnet sein, dass eine erste Einbauposition und eine zweite Einbauposition vorliegen. Die erste Einbauposition ist ebenso wie die zweite Einbauposition eine korrekte Einbauposition, so dass derartige Ausführungsformen auch eine Fügung erleichtern können.

Im Einzelnen wird im Folgenden auf Ausführungsformen der Offenbarung Bezug genommen, von denen einige Beispiele in den Figuren dargestellt sind. Jedes Beispiel dient zur Erläuterung der Offenbarung, nicht der Einschränkung der Offenbarung. So können beispielsweise Merkmale, die als Teil von Ausführungsformen dargestellt oder beschrieben sind, mit anderen Ausführungsformen verwendet werden, um weitere Ausführungsformen zu ergeben.

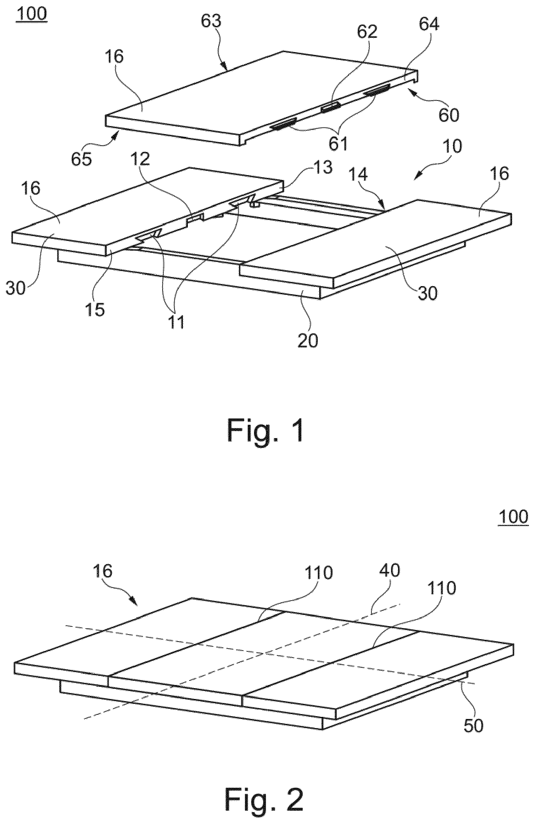

Fig. 1 zeigt schematisch eine mehrteilige Abdeckung 100 eines elektrischen Installationsgerätes beispielsweise für den Gebrauch in der Gebäudeinstallation. Die mehrteilige Abdeckung 100 ist in Fig. 1 in einem getrennten Zustand dargestellt.

Die mehrteilige Abdeckung 100 weist eine erste Teilabdeckung 10 aus einem Polycarbonat auf. Die erste Teilabdeckung 10 weist einen umlaufenden Rahmen 20 sowie zwei außen angeordnete Frontelemente 30 auf. Der umlaufende Rahmen 20 kann beispielsweise Verhakungen oder Bohrungen aufweisen, um die mehrteilige Abdeckung 10 mit dem elektrischen Installationsgerät zu verbinden. Die erste Teilabdeckung 10 ist per Spritzgussverfahren urgeformt und in weißer Farbe lackiert. Ferner weist die erste Teilabdeckung 10 Bedruckungen (nicht dargestellt) auf einem oder beiden Frontelementen 30 und/oder dem umlaufenden Rahmen 20 auf.

Die erste Teilabdeckung 10 weist zwei schwalbenschwanzprofilförmige Nuten 11 und eine rechteckprofilförmige Nut 12 an einer ersten Seitenfläche 13 auf. Eine zur ersten Seitenfläche 13 gegenüberliegend angeordnete zweite Seitenfläche 14 weist ebenso zwei schwalbenschwanzprofilförmige Nuten 11 und eine rechteckprofilförmige Nut 12 auf. Die erste Seitenfläche 13 und die zweite Seitenfläche 14 weisen einen Winkel 15 zwischen 80° und 100° auf zu einer Frontfläche 16 auf. Das heißt, die erste Seitenfläche 13 und die zweite Seitenfläche 14 stehen bevorzugt im Wesentlichen senkrecht zu der Frontfläche, wobei "im Wesentlichen senkrecht" in diesem Fall bedeutet, dass die erste Seitenfläche 13 und die zweite Seitenfläche 14 um bis zu 10° von einer Anordnung senkrecht zu der Fronfläche 16 abweichen können. Die erste Seitenfläche 13 in der Ausführungsform der Fig. 1 weist einen Winkel 15 zur Frontfläche 16 von 95° auf. Durch einen derartigen Hinterschnitt wird ein kleinerer Spalt 110 ermöglicht.

Die mehrteilige Abdeckung 100 weist ferner eine zweite Teilabdeckung 60 aus einem transluzenten Polycarbonat auf. Die zweite Teilabdeckung 60 ist per Spritzguss urgeformt. Die zweite Teilabdeckung 60 weist zwei schwalbenschwanzprofilförmige Rastelemente 61 sowie ein rechteckprofilförmiges Rastelement 62 an einer dritten Seitenfläche 63 auf. Eine zur dritten Seitenfläche 63 gegenüberliegend angeordnete vierte Seitenfläche 64 weist ebenso zwei schwalbenschwanzprofilförmige Rastelemente 61 sowie ein rechteckprofilförmiges Rastelement 62 auf. Die dritte Seitenfläche 63 und/oder die vierte Seitenfläche 64 können einen Winkel zu der Frontfläche 16 aufweisen, der von einer senkrechten Ausrichtung (90°) um bis zu 10° abweicht.

Die schwalbenschwanzprofilförmigen Rastelemente 61 der vierten Seitenfläche 64 und damit auch die schwalbenschwanzprofilförmigen Nuten 11 der ersten Seitenfläche 13 können einen größeren Abstand zueinander aufweisen als die schwalbenschwanzprofilförmigen Rastelemente 61 der dritten Seitenfläche 63 und damit auch die schwalbenschwanzprofilförmigen Nuten 11 der zweiten Seitenfläche 14 oder *vice versa.* Eine derart asymmetrische Anordnung der Rastelemente 61 und Nuten 11 führt zu einer eineindeutigen Einbauposition.

Die schwalbenschwanzprofilförmigen Rastelemente 61 der vierten Seitenfläche 64 und damit auch die schwalbenschwanzprofilförmigen Nuten 11 der ersten Seitenfläche 13 können symmetrisch entlang einer ersten Mittelachse 40 zu den schwalbenschwanzprofilförmigen Rastelementen 61 der dritten Seitenfläche 63 und den schwalbenschwanzprofilförmigen Nuten 11 der zweiten Seitenfläche 14 angeordnet sein. Ferner können die Rastelemente 61, 62 und Nuten 11, 12 symmetrisch entlang einer zweiten Mittelachse 50 angeordnet sein. Die zweite Mittelachse 50 ist senkrecht zur ersten Mittelachse 40 orientiert. Eine derart symmetrische Anordnung der Rastelemente 61, 62 und Nuten 11, 12 führt zu zwei möglichen Einbaupositionen. Die zweite Teilabdeckung 60 kann entsprechend um 180° um ihren Mittelpunkt rotiert und mit der ersten Teilabdeckung 10 gefügt werden.

Fig. 2 zeigt schematisch die mehrteilige Abdeckung 100 der Fig. 1 im gefügten Zustand. Die erste Teilabdeckung 10 umschließt die zweite Teilabdeckung 60 drei Seiten, also an der dritten Seitenfläche 63, an der vierten Seitenfläche 64 und an einer Rückseite 65 der zweiten Teilabdeckung 60. Die erste Teilabdeckung 10 weist in der in Fig. 1 und Fig. 2 gezeigten Ausführungsform eine Breite entlang der ersten Mittelachse 40 auf. Die zweite Teilabdeckung 60 weist auch die Breite auf.

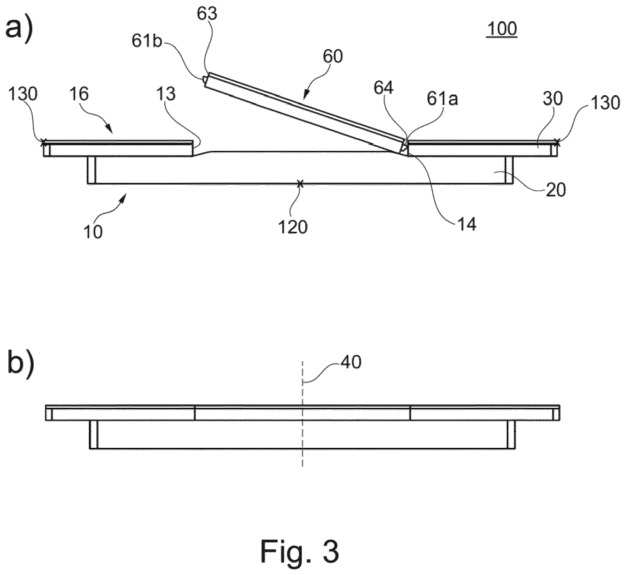

Fig. 3 zeigt schematisch einen Fügungsprozess einer mehrteiligen Abdeckung 100 gemäß Ausführungsformen der vorliegenden Offenbarung. Beispielsweise kann es sich bei der mehrteiligen Abdeckung 100 um eine mehrteilige Abdeckung 100 handeln, die der Ausführungsform der in Fig. 1 und Fig. 2 gezeigten Ausführungsform ähnlich ist.

Insbesondere weist die mehrteilige Abdeckung 100 eine erste Teilabdeckung 10 mit einem umlaufenden Rahmen 20 und zwei Frontelementen 30 auf. Ferner weist die mehrteilige Abdeckung 100 eine zweite Teilabdeckung 60 auf. Die zweite Teilabdeckung 60 weist zwei in Bezug auf eine erste Mittelachse 40 gegenüberliegend angeordnete schwalbenschwanzförmig ausgestaltete Rastelemente 61a, 61b auf. Ein erstes Rastelement 61a weist eine größere Ausdehnung in eine Richtung im Wesentlichen senkrecht zu einer vierten Seitenfläche 64 ausgehend von der vierten Seitenfläche 64 auf als ein zweites Rastelemente 61b eine Ausdehnung in eine Richtung im Wesentlichen senkrecht zu einer dritten Seitenfläche 63 ausgehend von der dritten Seitenfläche 63 aufweist. Das erste Rastelement 61a und das zweite Rastelement 61b können in Ausführungsformen im Wesentlichen parallel zu einer Frontfläche 16 aus einer Fläche hervorgehen, insbesondere auch in Ausführungsformen, in denen die Fläche nicht senkrecht zu der Frontfläche 16 orientiert ist.

Fig. 3 a) zeigt schematisch einen Fügeprozess der ersten Teilabdeckung 10 mit der zweiten Teilabdeckung 60. Die zweite Teilabdeckung 60 wird mit der vierten Seitenfläche 64 und dem ersten Rastelement 61a an eine zweite Seitenfläche 14 mit einer ersten Nut (nicht dargestellt) angelegt.

Die erste Teilabdeckung 10 wird elastisch von einem entspannten Zustand in einen Einbauzustand beispielsweise durch eine Druckkraftbeaufschlagung an Druckpunkt 120 und Druckkraftbeaufschlagung in im Wesentlichen gegensätzlicher Richtung an Druckpunkten 130 verformt.

Eine dritte Seitenfläche 63 wird an eine erste Seitenfläche 13 angelegt derart, dass das zweite Rastelement 61b von einer der ersten Nut gegenüberliegend angeordnete zweiten Nut (nicht dargestellt) aufgenommen wird.

Die erste Teilabdeckung 10 wird in den entspannten Zustand zurückversetzt indem keine Druckkraft mehr auf die erste Teilabdeckung 10, insbesondere auf die Punkte 120, 130, ausgeübt wird.

Fig. 3 b) zeigt die gefügte mehrteilige Abdeckung 100. Die zweite Teilabdeckung 60 ist gegenüber der ersten Teilabdeckung 10 in jede Richtung fixiert. Eine Relativbewegung und eine Rotation gegeneinander kann unter normaler Krafteinwirkung nicht mehr ausgeführt werden. Eine Demontage der ersten Teilabdeckung 10 von der zweiten Teilabdeckung 60 ist üblicherweise nicht vorgesehen.

Sollte die zweite Teilabdeckung 60 beispielsweise aus einem empfindlicheren Material bestehen als die erste Teilabdeckung 10 und ein Austausch der zweiten Teilabdeckung 60 notwendig werden, so kann beispielsweise unter größerer Krafteintragung eine Trennung der zweiten Teilabdeckung 60 von der ersten Teilabdeckung möglich sein. Es bietet sich in diesem Fall an, die Rastelemente 61, 62 an der zweiten Teilabdeckung 60 anzuordnen. Es ist wahrscheinlicher, dass die Rastelemente 61, 62 bei größerer Krafteintragung abbrechen als dass die Nuten 11, 12 zerstört werden. Derart könnte die erste Teilabdeckung 10 weiterverwendet werden.

In der vorstehenden Beschreibung wurde eine mehrteilige Abdeckung eines elektrischen Installationsgerätes sowie ein Verfahren zur Herstellung einer mehrteiligen Abdeckung eines elektrischen Installationsgerätes unter Bezugnahme auf spezifische Beispiele dargestellt. Es ist zu berücksichtigen, dass verschiedene Aspekte und Ausführungsformen, die hier offenbart werden, in anderen Kombinationen als den spezifischen Kombinationen, die in den Figuren dargestellt sind, kombiniert werden können. Es wird davon ausgegangen, dass verschiedene Modifikationen an den genannten Ausführungsformen vorgenommen werden können, ohne vom Umfang der Offenbarung und der folgenden Ansprüche abzuweichen.

### BEZUGSZEICHENLISTE

- 10: erste Teilabdeckung
- 11: schwalbenschwanzprofilförmige Nuten
- 12: rechteckförmige Nut
- 13: erste Seitenfläche
- 14: zweite Seitenfläche
- 15: Winkel
- 16: Frontfläche
- 20: umlaufender Rahmen
- 30: Frontelemente
- 40: erste Mittelachse
- 50: zweite Mittelachse
- 60: zweite Teilabdeckung
- 61: schwalbenschwanzprofilförmige Rastelemente
- 61a: erstes Rastelement
- 61b: zweites Rastelement
- 62: rechteckförmiges Rastelement
- 63: dritte Seitenfläche
- 64: vierte Seitenfläche
- 65: Rückseite
- 100: mehrteilige Abdeckung
- 110: Spalt
- 120, 130: Punkte

## Patentansprüche

1. Mehrteilige Abdeckung (100) eines elektrischen Installationsgerätes, aufweisend
eine erste Teilabdeckung (10) aus einem ersten Material;
eine zweite Teilabdeckung (60) aus einem zweiten Material, wobei das zweite Material in mindestens einer Materialeigenschaft verschieden zum ersten Material ist;
wobei die erste Teilabdeckung (10) und die zweite Teilabdeckung (60) mittels mindestens zwei gegenüberliegend angeordneten Rastelement-Nut Verbindungen miteinander verbunden sind.

2. Mehrteilige Abdeckung (100) gemäß Anspruch 1, wobei mindestens eine Rastelement-Nut Verbindung dazu konfiguriert ist, unter einer elastischen Verformung der ersten Teilabdeckung (10) und/oder der zweiten Teilabdeckung (60) gefügt zu werden.

3. Mehrteilige Abdeckung (100) gemäß einem der vorherigen Ansprüche, wobei die erste Teilabdeckung (10) die zweite Teilabdeckung (60) an mindestens zwei, insbesondere an mindestens drei Seiten, umschließt und/oder wobei die erste Teilabdeckung (10) und/oder die zweite Teilabdeckung (60) mindestens eine Seitenfläche mit einem Winkel zwischen 80° und 100° zu einer Frontfläche (16) aufweist.

4. Mehrteilige Abdeckung (100) gemäß einem der vorherigen Ansprüche, wobei mindestens ein Rastelement der mindestens zwei Rastelement-Nut Verbindungen schwalbenschwanzprofilförmig ausgestaltet ist, und/oder wobei die mindestens zwei Rastelemente unterschiedliche Längen aufweisen.

5. Mehrteilige Abdeckung (100) gemäß einem der vorherigen Ansprüche, wobei die mindestens zwei Rastelement-Nut Verbindungen asymmetrisch angeordnet sind derart, dass eine erste Einbauposition eineindeutig vorgegeben ist; oder
wobei die mindestens zwei Rastelement-Nut Verbindungen derart angeordnet sind, dass eine erste Einbauposition und eine zweite Einbauposition vorliegen.

6. Verfahren zur Herstellung einer mehrteiligen Abdeckung (100) eines elektrischen Installationsgerätes, aufweisend die Schritte:
Herstellen einer ersten Teilabdeckung (10) aus einem ersten Material, wobei die erste Teilabdeckung mindestens zwei gegenüberliegend angeordnete Nuten aufweist;
Herstellen einer zweiten Teilabdeckung (60) aus einem zweiten Material, wobei das zweite Material in mindestens einer Materialeigenschaft verschieden zum ersten Material ist, und wobei die zweite Teilabdeckung (60) mindestens zwei gegenüberliegend angeordnete Rastelemente aufweist; und
Herstellen von mindestens zwei Rastelement-Nut Verbindungen zwischen den mindestens zwei Nuten der ersten Teilabdeckung (10) und den mindestens zwei Rastelementen der zweiten Teilabdeckung (60).

7. Verfahren zur Herstellung einer mehrteiligen Abdeckung (100) gemäß Anspruch 6, wobei das Herstellen der Rastelement-Nut Verbindung die Schritte aufweist:
Elastisches Verformen der ersten Teilabdeckung (10) von einem entspannten Zustand in einen Einbauzustand;
Anlegen und/oder Einlegen der zweiten Teilabdeckung (60) an/in die erste Teilabdeckung (10); und
Zurückversetzen der ersten Teilabdeckung (10) in den entspannten Zustand.

8. Verfahren zur Herstellung einer mehrteiligen Abdeckung (100) gemäß einem der Ansprüche 6-7, wobei die erste Teilabdeckung (10) derart hergestellt wird, dass sie die zweite Teilabdeckung (60) an mindestens zwei, insbesondere an mindestens drei Seiten umschließt und/oder wobei die erste Teilabdeckung (10) und/oder die zweite Teilabdeckung (60) mindestens eine Seitenfläche mit einem Winkel zwischen 80° und 100° zu einer Frontfläche (16) aufweist.

9. Verfahren zur Herstellung einer mehrteiligen Abdeckung (100) gemäß einem der Ansprüche 6-8, wobei mindestens ein Rastelement der mindestens zwei Rastelemente schwalbenschwanzprofilförmig hergestellt ist und/oder wobei die mindestens zwei Rastelemente mit unterschiedlichen Längen hergestellt werden.

10. Verfahren zur Herstellung einer mehrteiligen Abdeckung (100) gemäß einem der Ansprüche 6-9, wobei die mindestens zwei Rastelement-Nut Verbindungen asymmetrisch angeordnet sind derart, dass eine erste Einbauposition eineindeutig vorgegeben ist; oder wobei die mindestens zwei Rastelement-Nut Verbindungen derart angeordnet sind, dass eine erste Einbauposition und eine zweite Einbauposition vorliegen.
